**Europäisches Patentamt**

**European Patent Office**

**Office européen des brevets**

(19)

(11) Veröffentlichungsnummer : **0 319 507 B1**

(12) **EUROPÄISCHE PATENTSCHRIFT**

(45) Veröffentlichungstag der Patentschrift :
**08.04.92 Patentblatt 92/15**

(21) Anmeldenummer : **88890143.6**

(22) Anmeldetag : **10.06.88**

(51) Int. Cl.⁵ : **G11B 33/04, A47F 1/12**

(54) **Facheinrichtung.**

(30) Priorität : **12.06.87 AT 1501/87**

(43) Veröffentlichungstag der Anmeldung :
**07.06.89 Patentblatt 89/23**

(45) Bekanntmachung des Hinweises auf die
Patenterteilung :
**08.04.92 Patentblatt 92/15**

(84) Benannte Vertragsstaaten :
**AT BE CH DE ES FR GB GR IT LI LU NL SE**

(56) Entgegenhaltungen :
**AT-A- 334 577**
**AT-A- 348 186**
**CH-A- 334 987**

(56) Entgegenhaltungen :
**CH-A- 363 772**
**DE-U- 8 419 448**
**FR-A- 1 104 110**
**US-A- 1 840 297**

(73) Patentinhaber : **Lift**
**Verkaufsgeräte-Gesellschaft m.b.H.**
**Franzensgasse 25**
**A-1050 Wien (AT)**

(72) Erfinder : **Schubert, Otto**
**Franzengasse 25**
**A-1050 Wien (AT)**

(74) Vertreter : **Weinzinger, Arnulf, Dipl.-Ing. et al**
**Riemergasse 14**
**A-1010 Wien (AT)**

EP 0 319 507 B1

## Beschreibung

Die Erfindung betrifft eine Facheinrichtung zur Aufbewahrung und Zurschaustellung von steifen, flachen Gegenständen, wie insbesondere CD-(Compact-Disc-)-Kassetten.

Es ist eine Präsentationsvorrichtung bekannt (vergleiche z.B DE-U-8 419 448), die in einer in Seitenansicht hohlspiegelartigen Anordnung untere kistenartige Aufnahmeabteile sowie obere Aufnahmefachreihen aufweist. Die Aufnahmefächer sind dabei durch C-Profile gebildet, die eine gerade Rückwand besitzen, an die oben und unten horizontale Flanschen mit Abwinkelungen anschließen. Jedes so gebildete Aufnahmefach ist dabei zur Aufnahme eines einzigen Gegenstandes, nämlich einer CD-Kassette (Compact-Disc-Kassette), gedacht, wobei zur Begrenzung und gegenseitigen Trennung der Aufnahmefächer in einer horizontalen Reihe zapfenförmige Distanzelemente an der Rückwand befestigt sind, die von letzterer horizontal vorstehen. Eine im Aufnahmefach aufgenommene CD-Kassette liegt mit ihrem unteren Rand auf dem den Boden bildenden unteren Flansch des Profils auf, wobei sie durch die vordere Abwinkelung im Fach zurückgehalten wird. Am oberen Rand wird die CD-Kassette durch den oberen Flansch mit der vorderen, nach unten gerichteten Abwinkelung im Aufnahmefach zurückgehalten und gegen ein Herausfallen nach vorne gesichert. Um dabei dennoch ein Einsetzen der CD-Kassetten in die Aufnahmefächer von vorne bzw. ein Herausnehmen der Gegenstände aus diesen Aufnahmefächern nach vorne heraus ohne besondere zusätzliche Vorkehrungen zu ermöglichen, ist der Abstand der unteren Kante der oberen Abwinkelung vom Boden (und damit auch von der oberen Kante der unteren Abwinkelung) etwas kleiner als die Höhe der CD-Kassetten, so daß eine auf dem Boden aufliegende CD-Kassette mit dem oberen Randbereich noch hinter die obere Abwinkelung ragt. Der Abstand der oberen Kante der Abwinkelung des unteren Flansches vom oberen Flansch ist jedoch größer als die Höhe der CD-Kassette, so daß diese bei einem Anheben zum oberen Flansch hin mit ihrem unteren Rand in eine Position höher als die Oberkante der unteren Abwinkelung gebracht werden kann, wonach die CD-Kassette mit ihrem unteren Rand nach vorne aus dem Aufnahmefach herausgeschwenkt werden kann.

Diese Ausbildung der Aufnahmefächer hat sich in Kombination mit der Anbringung der unteren kistenartigen Aufnahmeabteilreihen in der Praxis sehr bewährt, jedoch ist als Nachteil doch anzuführen, daß in den oberen Aufnahmefachreihen der bekannten Präsentationsvorrichtung nur verhältnismäßig wenig Gegenstände, nämlich CD-Kassetten (mit oder ohne CD-Platte), untergebracht werden können.

Aus der US-A-1 840 297 ist ferner eine Facheinrichtung mit einem schrägen Boden sowie einer zylindrischen Rolle bekannt, um die aufzubewahrenden Gegenstände, nämlich Samenpackungen, zufolge der Schwerkraft nach vorne gegen einen unteren Anschlagrand sowie gegen einen in ungefähr halber Fachhöhe quer gespannten Draht zu belasten. Die zylindrischen Rollen sind jedoch als zusätzliche bewegliche Teile in den einzelnen Fächern umständlich in der Handhabung und erschweren so vor allem das Einordnen der Packungen in den Fächern. Ferner können diese Rollen als gesonderte Einzelteile leicht verloren gehen, und überdies beschränken sie den für die aufzubewahrenden Gegenstände zur Verfügung stehenden Platz ganz wesentlich - beispielsweise nehmen sie mehr als die Hälfte der Fachtiefe ein -, was im Fall von CD-Platten, anders als bei Samenpackungen, besonders ins Gewicht fällt.

Aufgabe der Erfindung ist nun die Schaffung einer Facheinrichtung, die eine problemlose Unterbringung von mehreren Gegenständen, insbesondere CD-Kassetten, hintereinander in einem Stapel pro Aufnahmefach ermöglicht, wobei der vorhandene Platz möglichst gut genutzt wird und ein einfaches händisches Nachfüllen sowie eine geordnete, ansprechende Unterbringung von Gegenständen in den Aufnahmefächern möglich sein sollen.

Hierzu sieht die Erfindung eine Facheinrichtung zur Aufbewahrung und Zurschaustellung von steifen, flachen Gegenständen, wie insbesondere CD-(Compact-Disc-)Kassetten, vor mit einem die Gegenstände in zumindest im wesentlichen aufrechter Lage abstützenden, zumindest teilweise schräg nach vorne abfallend ausgebildeten Boden, an dessen Vorderseite ein, z.B. durch einen hochstehenden Rand gebildeter, unterer Anschlag für die Gegenstände vorgesehen ist, und an den rückseitig eine aufrechte Rückwand anschließt, mit einem die Gegenstände im oberen Randbereich zurückhaltenden oberen Anschlag, wobei die Gegenstände zum Nachfüllen oder zur Entnahme hinter dem oberen Anschlag soweit relativ zum unteren Anschlag hebbar sind, daß sie zum Einsetzen oder zur Herausnahme mit ihrem unteren Rand über den unteren Anschlag geschwenkt werden können, und mit zumindest einer die Gegenstände nach vorne hin belastenden Feder, die im Bereich der Rückwand vorgesehen ist, und die nur im oberen Fachbereich wirksam ist und mit einem oberen Anlageteil bei leerer Facheinrichtung hinter dem oberen Anschlag angeordnet ist.

Bei einer derartigen Ausbildung können, sofern nur die Tiefe des Aufnahmefaches, d.h. des Bodens, entsprechend der Anzahl der aufzubewahrenden Gegenstände sowie deren Dicke gewählt wird, problemlos mehrere Gegenstände stapelartig hintereinander in der Facheinrichtung untergebracht werden, wobei durch die Feder praktisch kein Platz verloren geht, so daß der vorhanden Platz optimal ausgenutzt werden kann; die Gegenstände, die dadurch, daß der Fachboden zumindest teilweise schräg nach vorne abfällt, bereits aufgrund des Eigengewichtes nach vorne in Anlage am unteren Anschlag nachrutschen, wenn ein Gegenstand dem Aufnahmefach entnommen wird, werden durch die Feder zusätzlich nach vorne gedrückt, so daß die Gegenstände auch sicher am oberen Anschlag der Facheinrichtung anliegen werden. Da der Fachboden schräg ausgebildet ist, ist es nicht notwendig, eine Feder mit hoher Federkraft vorzusehen, die die Gegenstände unter Überwindung einer hohen Reibungskraft nach vorne drücken müßte, die Feder kann vielmehr im Hinblick darauf, daß sie die Gegenstände nur mehr oder weniger am Zurückkippen hindern soll, verhältnismäßig schwach ausgebildet sein. Dies erleichtert wiederum das Einsetzen der Gegenstände in die Facheinrichtung, was entgegen der von der Feder ausgeübten Kraft zu erfolgen hat.

Es sei hier erwähnt, daß aus der AT-B-334 577 an sich eine Enrichtung bekannt ist, bei der eine mittig an Packungen angreifende Feder vorgesehen ist, um diese auf einem horizontalen Boden nach außen zu drücken. Dabei muß die Feder ziemlich stark bemessen sind, um den Reibungswiderstand zu überwinden, was aber wiederum das Einordnen der Packungen in den Fächern erschwert. Demgegenüber kann bei der erfindungsgemäßen Facheinrichtung wie erwähnt eine Feder mit einer relativ niedrigen Federkraft verwendet werden, die ein Einfüllen der Gegenstände in das jeweilige Fach nicht behindert, und die faktisch nur als Element zum Steuern des Vorrutschens bzw. Nachrutschens der Gegenstände (aufgrund von deren Eigengewicht) in im wesentlich aufrechter Lage sowie zum Halten der Gegenstände in der im wesentlich aufrechten Lage, in Anlage am oberen Anschlag, dient, wobei sie dementsprechend auch nur im oberen Fachbereich wirksam (und hinter dem oberen Anschlag zurückgehalten) ist. Dabei wird, wenn die Gegenstände wie bei der Präsentationseinrichtung gemäß DE-U-8 419 448 von vorne unten eingesetzt werden , die Feder, ohne daß sie stören könnte, durch die Gegenstände einfach nach hinten gedrückt. Dadurch, daß der obere Anlageteil der Feder hinter dem oberen Anschlag angeordnet ist, kann durch Einwärtsdrücken der Gegenstände die Feder einfach entgegen ihrer Federkraft zurückgedrückt werden, ohne daß ihr Anlageteil hiebei stören könnte, wie etwa im Fall, wenn der Anlageteil der Feder unterhalb des oberen Anschlags nach vorne vorsteht. Dadurch können die Gegenstände auch dann besonders bequem eingesetzt werden, wenn die Facheinrichtung leer ist. Außerdem wird die Feder, wenn sie mit ihrem oberen Anlageteil am Anschlag anliegt, zusätzlich in ihrer Lage gesichert, was vor allem dann von Bedeutung ist, wenn die Feder einfach in einer Art Steckverbindung in der Facheinrichtung montiert ist.

Die Feder könnte an sich an der Oberseite des jeweiligen Aufnahmefachs befestigt sein. Hieraus könnten sich aber zumindest bei größeren Stapeln, z.B mit sieben Gegenständen oder mehr, d.h. bei tieferen Aufnahmefächern, Schwierigkeiten ergeben. Aus diesem Grund sowie auch zur Erleichterung der Montage ist es daher günstig, wenn die Feder an der Rückwand befestigt ist.

Eine herstellungs- und montagemäßig besonders vorteilhafte Ausführungsform ist ferner dadurch gekennzeichnet, daß als Feder eine Blattfeder vorgesehen ist, die sich von einer unteren Stelle an der Rückwand mit ihrem freien Ende nach vorne oben erstreckt.

Eine besonders einfache Montage der Blattfeder kann dadurch erzielt werden, daß die Blattfeder zu ihrer Befestigung durch eine Öffnung in der Rückwand oder im Boden eingesteckt und in der Öffnung zufolge ihrer Federkraft gehalten ist. Dabei ist es weiters vorteilhaft, wenn oberhalb der Öffnung ein Vorsprung an der Rückwand vorgesehen ist, der in ein Loch in der Blattfeder zu deren zusätzlicher Lagesicherung eingreift.

Eine besonders vorteilhafte Ausführungsform der erfindungsgemäßen Facheinrichtung ist ferner dadurch gekennzeichnet, daß der Boden einen vorderen horizontalen Bodenabschnitt und einen daran anschließenden hinteren schrägen Abschnitt aufweist, und daß im horizontalen Bodenabschnitt sowie im an diesen vorne anschließenden Rand eine Ausnehmung mit einer Tiefe entsprechend ungefähr der Dicke eines der Gegenstände vorgesehen ist, um jeweils den vordersten Gegenstand eines Stapels ergreifen zu können. Dabei entspricht der vordere horizontale Bodenabschnitt zweckmäßigerweise in seiner Tiefe der Dicke eines aufzubewahrenden Gegenstandes, der somit mit seiner unteren Schmalseite vollflächig auf dem horizontalen Bodenabschnitt stehen kann, was aus Stabilitätsgründen vorteilhaft ist.

An sich ist aus der FR-PS 1 104 110 eine Einrichtung mit Schrägfächern bekannt, bei denen der Boden einen vorderen, nach vorne vorstehenden, ungefähr horizontalen Abschnitt hat, der ein Rückwärtskippen der vordersten Packungen ermöglichen soll. Dies steht im Gegensatz zur vorliegenden Facheinrichtung und dem dabei vorzugsweise angestrebten vollflächigen Aufruhen der CD-Kassetten mit den Schmalseiten auf dem vorderen Bodenabschnitt, wobei hier nichtsdestoweniger - durch Vorsehen der Griffausnehmung - ein problemloses Entnehmen der jeweiligen vordersten Kassete möglich ist. Im übrigen ist in der FR-PS 1 104 110 keine Einrichtung geoffenbart, um die Packungen nach vorne hin zu belasten.

Durch die Ausbildung der vorliegenden Facheinrichtung mit einem schrägen Boden und einer die Gegenstände nach vorne drückenden Feder wird auch eine Ausführung in vorteilhafter Weise ermöglicht, bei der der obere Anschlag gegenüber dem unteren Anschlag am boden in horizontaler Richtung versetzt ist, wobei die Versetzung sowohl nach vorne als auch nach hinten erfolgen kann. Bei derart gegeneinander versetzten oberen und unteren Anschlägen für die Gegenstände werden die Gegenstände in der Facheinrichtung in einer Schräglage, entweder nach vorne überhängend oder nach hinten geneigt, in Anlage an den Anschlägen gehalten, was beispielsweise im falle eines Einbaus in der einleitend erwähnten bekannten Präsentationsvorrichtung, mit der in Seitenansicht hohlspiegelartigen Anordnung, aus Gründen einer weiter verbesserten übersicht Vorteile erbringt.

Die Erfindung wird nachstehend anhand von bevorzugten Ausführungsbeispielen noch weiter erläutert. Im einzelnen zeigen in der Zeichnung:

Fig. 1 eine schaubildliche Ansicht eines Teiles einer Facheinrichtung von schräg vorne;

Fig. 2 eine Seitenansicht einer solchen Facheinrichtung;

Fig. 3 einen Schnitt durch eine solche Facheinrichtung, im Bereich der Befestigung einer Blattfeder an der Rückwand;

Fig. 4 eine Vorderansicht einer Blattfeder;

Fig. 5 eine zugehörige Seitenansicht dieser Blattfeder gemäß Fig. 4;

Fig. 6 eine Vorderansicht eines Teiles der Facheinrichtung gemäß Fig. 1;

Fig. 7 in einer Schnittansicht ähnlich Fig. 3 eine modifizierte Facheinrichtung; und

Fig. 8 eine Schnittansicht einer weiteren abgewandelten Facheinrichtung.

Die in der Zeichnung veranschaulichte Facheinrichtung 1 kann beispielsweise Teil einer Präsentationsvorrichtung sein, wie sie in der einleitend erwähnten Schrift DE-U-8 419 448 beschrieben ist, welche in ihrem unteren Bereich kistenartige Aufnahmeabteile und in ihrem oberen Bereich regalartige, stufenweise nach oben vorspringende Aufnahmefachreihen besitzt. Die Facheinrichtung 1 könnte dabei zur Bildung der Aufnahmefachreihen der bekannten Präsentationsvorrichtung herangezogen werden. Selbstverständlich wäre es aber auch denkbar, die dargestellte Facheinrichtung 1 auch in anderen Anwendungen, etwa bei einem Wandregal, Hängeregal usw., einzusetzen.

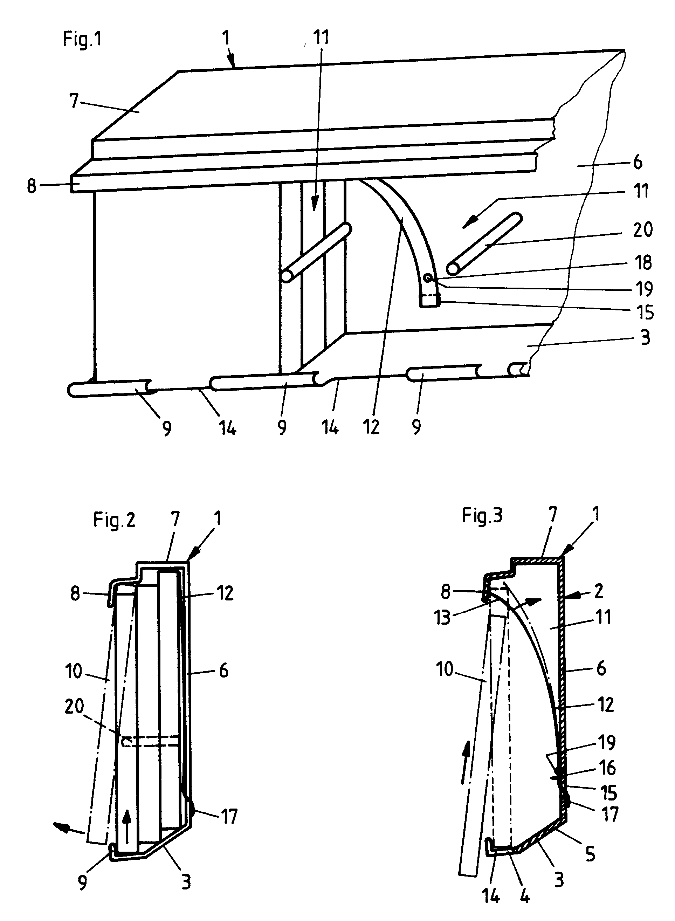

Die in Fig. 1 bis 3 und 6 dargestellte Facheinrichtung 1 weist als Hauptbestandteil ein ungefähr C-förmiges Bleckprofil 2 auf, welches einen Boden 3 mit einem vorderen horizontalen Abschnitt 4 und einem dahinter anschließenden schrägen Abschnitt 5 definiert. Der schräg nach hinten ansteigende Bodenabschnitt 5 geht in eine Rückwand 6 über, an die an der Oberseite eine abgestufte Deckwand 7 mit einer vorderen, einen oberen Anschlag 8 definierenden Abwinkelung anschließt. Der horizontale Bodenabschnitt 4 geht vorne in einen hochstehenden Rand über, der unterbrochen ist, wie nachstehend noch näher erläutert werden wird, und der einen unteren Anschlag 9 für die in der Facheinrichtung enthaltenen steifen, flachen Gegenstände 10, insbesondere CD-Kassetten, bildet.

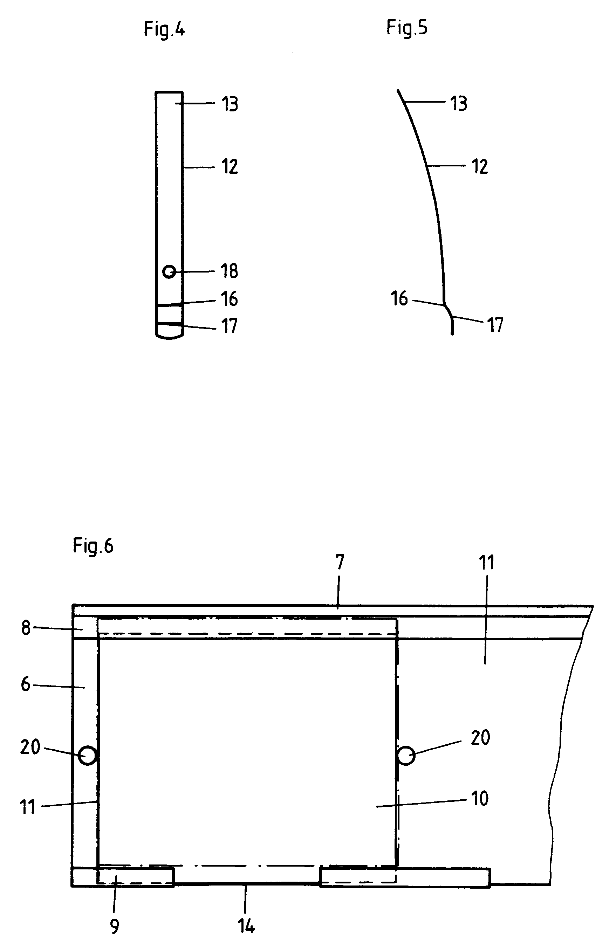

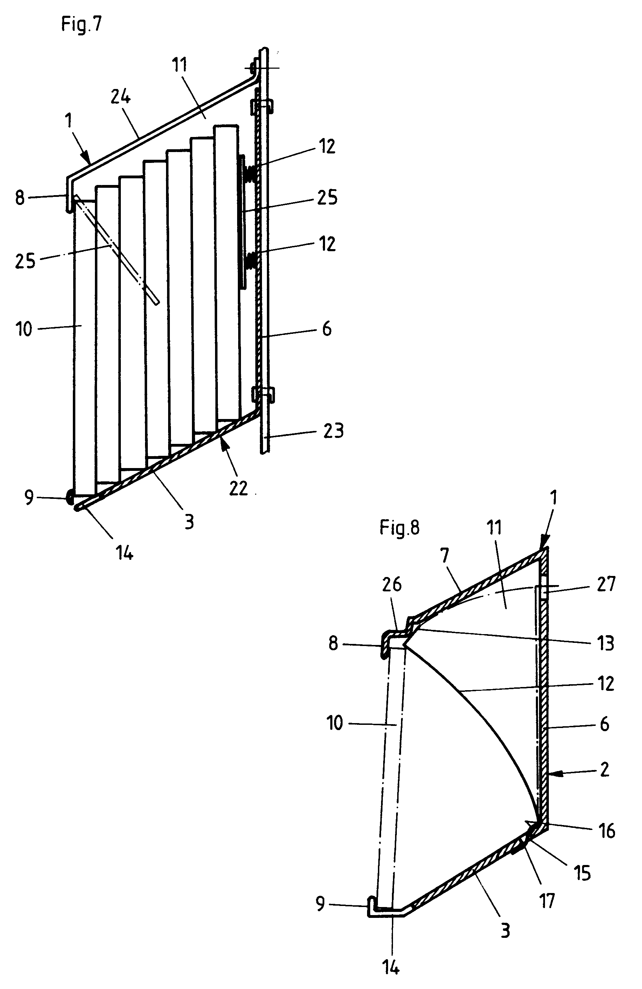

Das so gebildete Fach 11 innerhalb des C-Profils 2 (bzw. jedes Fach einer horizontalen Reihe von Fächern in der Facheinrichtung 1, vgl. Fig. 1 und 6) weist eine Tiefe auf, die der Dicke von mehreren, z.B. drei (Fig. 1 und 3) oder sieben (vgl. auch Fig. 7 und 8) Gegenständen 10 entspricht. Auf diese Weise können wesentlich mehr Gegenstände 10 in den Fachreihen untergebracht werden als etwa bei den Fachreihen der Präsentationsvorrichtung gemäß DE-U-8 419 448. Um eine ordentliche, ansprechende Präsentation der Gegenstände 10 dabei auch dann sicherzustellen, wenn die einzelnen Fächer 11 nicht voll mit Gegenständen 10 gefüllt sind, etwa wenn nur ein oder zwei Gegenstände 10 enthalten sind, sind bestimmte Maßnahmen getroffen. Eine dieser Maßnahmen besteht darin, den Boden 3 wie erwähnt zumindest abschnittsweise schräg nach vorne abfallend auszubilden, vgl. den schrägen Bodenabschnitt 5. Der vordere horizontale Bodenabschnitt 4 entspricht in seiner Tiefe ungefähr der Dicke eines der Gegenstände 10, vgl. Fig. 2, um so eine stabile Abstützung des vordersten Gegenstandes eines Stapels von hintereinander angeordneten Gegenständen 10 sicherzustellen. Durch den schräg abfallenden Bodenabschnitt 5 können die im jeweiligen Fach 11 enthaltenen Gegenstände 10 auf Grund ihrer Eigengewichts nach vorne rutschen, bis der vorderste Gegenstand in Anlage am unteren Anschlag 9 vor-liegt, und zwar auch dann, wenn beispielsweise nur zwei anstatt wie dargestellt drei Gegenstände 10 im Fach 11 angeordnet sind. Um ferner ein etwaiges Zurückklappen von Gegenständen 10 in den nicht vollständig gefüllten Fächern 11 zu verhindern, ist in jedem Fach 11 zumindest eine Feder 12 vorgesehen, die beispielsweise als Blattfeder mit relativ schwacher Federkraft ausgebildet ist, vgl. Fig. 1 bis 5. Die Blattfeder 12 ist dabei an der Rückwand 6 mit ihrem unteren Ende befestigt und drückt mit ihren als Anlageteil dienenden oberen, freien Ende 13, mit dem sie im oberen Fachbereich wirksam ist, die Gegenstände 10 nach vorne in Anlage am oberen Anschlag 8. Die Feder 12 hat somit weniger die Aufgabe, den Gegenständestapel insgesamt nach vorne zu verschieben, als vielmehr die Funktion, eine sichere Anlage der oberen Randbereiche der Gegenstände 10 am oberen Anschlag 8 sicherzustellen, wogegen das Nachrücken der Gegenstände 10 nach vorne, bis in Anlage am unteren Anschlag 9, im wesentlichen durch den schräg abfallenden Bodenabschnitt 5 bzw. das Eigengewicht der Gegenstände 10 sichergestellt wird. Demgemäß kann die Feder 12, wie erwähnt, eine verhältnismäßig schwache Federkraft besitzen, was insofern von Vorteil ist, als das Befüllen der Fächer 11 der Facheinrichtung 1 mit den Gegenständen 10 durch die Feder 12 praktisch überhaupt nicht behindert wird, vgl. beispielsweise Fig. 3, in der gezeigt ist, wie ein mit strichpunktierten Linien schematisch veranschaulichter Gegenstand 10 in das Fach 11 unter Auslenken der Blattfeder 12, die in der Ruhestellung mit ihrem oberen freien Ende 13 an der Rückseite des oberen Anschlages 8 anliegt, nach hinten, gemäß Pfeilrichtung, eingesetzt wird.

In der in Fig. 3 mit gestrichelten Linien veranschaulichten eingesetzten Lage des Gegenstandes 10 liegt dieser oben und unten an den Anschlägen 8, 9 an, wobei seine Oberseite in Abstand von der oberen Deckwand 7 vorliegt.

Zur Entnahme kann, wie in Fig. 2 schematisch beim vordersten Gegenstand 10 mit strichpunktierten Linien veranschaulicht ist, der Gegenstand, d.h. der vorderste Gegenstand, etwas angehoben werden, bis er mit seiner Unterseite über den unteren Anschlag 9 nach vorne herausgeschwenkt werden kann, wonach dieser Gegenstand 10 noch ein Stück abwärts gezogen und sodann weggenommen werden kann, vgl. in diesem Zusammenhang auch die Darstellung in Fig. 6, in der ebenfalls mit strichpunktierter Linie die angehobene Stellung des vordersten Gegenstandes 10 gezeigt ist.

Es sei erwähnt, daß diese Art der Herausnahme eines Gegenstandes 10 aus einem Fach der bereits in der Schrift DE-U-8 419 448 beschriebenen Technik im wesentlichen entspricht. Anders als bei der hieraus bekannten Präsentationsvorrichtung sind jedoch bei der dargestellten Facheinrichtung Gegenständestapel in den Fächern 11 enhalten, und es wird jeweils bloß der vorderste Gegenstand 10 eines solchen Stapels entnommen; um dies zu steuern, ist, anders als bei der bekannten Präsentationsvorrichtung, eine Ausnehmung 14 bloß im vorderen Bereich des Bodens 3 vorgesehen, wobei diese Durchgreif-Ausnehmung 14 eine Tiefe entsprechend ungefähr der Stärke eines Gegenstandes 10 aufweist, somit also wie dargestellt sich bloß über die Tiefe des horizontalen Bodenabschnittes 4 (und selbstverständlich im hochstehenden Rand 9, der dadurch das erwähnte unterbrochene Aussehen erhält) erstreckt. Durch die abgewinkelte Ausbildung des Bodens 3, mit dem vorderen horizontalen Abschnitt 4 und dem schrägen Abschnitt 5, und mit der Ausnehmung 14 bis hin zum übergang zwischen den beiden Bodenabschnitten 4, 5, wird das Erfassen des vordersten Gegenstandes 10 von der Unterseite her erleichtert, wobei auch zu berücksichtigen ist, daß, wie aus Fig. 2 ersichtlich ist, die Gegenstände 10 in einem Stapel in einer stufenweisen Anordnung vorlegen, so daß der vorderste Gegenstand 10 durch die Ausnehmung 14 hindurch auch an seiner Rückseite im unteren Randbereich ergriffen werden kann. Dadurch wird das sichere Erfassen des vordersten Gegenstandes 10 erleichtert.

Der obere Flansch des C-Profils 2, d.h. die obere Deckwand 7, ist im vorderen, dem oberen Anschlag 8 benachbarten Bereich abgestuft, wodurch eine definierte Anschlagfläche für die Oberseite des vordersten Gegenstandes 10 beim Anheben und Herausheben (vgl. Fig. 2) erhalten wird.

In der in Fig. 2 und 3 dargestellten Ausführungsform ist die Blattfeder 12 an der Rückwand 6 durch einfaches Einstecken in eine in Ansicht rechteckige öffnung 15 in der Rückwand 6 befestigt. Die Blattfeder 12 weist dabei, vgl. Fig. 4 und 5, in ihrem unteren Endbereich eine doppelte Abwinkelung 16, 17 auf, wobei sich der Bereich zwischen diesen Abwinkelungen 16, 17 (vgl. auch Fig. 3) im montierten Zustand innerhalb der rechteckigen öffnung 15 befindet. Oberhalb von diesen Abwinkelungen 16, 17 ist in der Blattfeder 12 ein kreisförmiges Loch 18 ausgeschnitten, in das im montierten Zustand der Blattfeder 12, vgl. wieder Fig. 3, ein an der Rückwand 6 vorgesehener noppen-oder warzenförmiger, kreisrunder Vorsprung 19 (Fig. 2) eingeschnappt ist. Auf diese Weise wird die Blattfeder 12 allein auf Grund ihrer eigenen Federkraft in der montierten Stellung gehalten, und sie kann demgemäß einfach und problemlos montiert oder aber ausgewechselt werden. Der noppenförmige Vorsprung 19 kann beispielsweise durch Drücken des Blechmaterials des C-Profils 2 erzeugt werden.

Um die Fächer 11 in der Facheinrichtung 1 voneinander zu trennen, d.h. als Distanz- oder Tennelemente zwischen den Gegenständestapeln in der Facheinrichtung 1, sind in bekannter Weise Zapfen oder Stangenelemente 20 an der Rückwand 6 in entsprechenden Abständen voneinander befestigt, vgl. Fig. 1, 2 und 6.

In Fig. 7 ist eine abgewandelte Facheinrichtung 1 veranschaulicht, bei der im Unterschied zur Facheinrichtung 1 gemäß Fig. 1 bis 6 der gesamte Boden 3 nach vorne schräg abfallend ausgebildet ist. Der Boden 3, an dessen Vorderseite wiederum ein unterer, hier durch eine längsverlaufende Stange vor dem Fach 11 gebildeter Anschlag 9 für den unteren Rand der CD-Kassetten 10 im Fach 11 der Facheinrichtung 1 vorgesehen ist, bildet zusammen mit der Rückwand 6 der Facheinrichtung 1 einen Teil, beispielweise ein im wesentlichen L-förmiges Blechprofil 22. Dieses L-Profil 22 kann an einer nur schematisch veranschaulichten Tragwand oder dgl. 23 befestig, etwa angeschraubt, sein. Die oberen Anschläge 8 sind bei dieser Ausführungsform durch die vorderen, abgewinkelten Enden von an der gennanten Tragwand 23 befestigten Stangen 24 gebildet. Um ferner die Gegenstände 10 des im Fach 11 enthaltenen Stapels in ihrem oberen Bereich nach vorne in Anlage am oberen Anschlag 8 zu drücken, sind gemäß Fig. 7 mehrere Federn 12, hier in Form von Schraubenfedern, vorgesehen, wobei diese Federn 12 an ihrer vorderen Seite mit einem als oberer Anlageteil wirksamen Platten- oder Bügelelement 25 auf irgendeine bekannte Art verbunden sind, welches an der Rückseite des hintersten Gegenstandes 10 anliegt. Mit ihren hinteren Enden können die Schraubenfedern 12 an der Rückwand 6 beispielsweise in dort vorhandenen, nicht näher dargestellten Löchern eingehakt und/oder angeschweißt sein. Dabei ist es zweckmäßig, die unteren Schraubenfedern 12 kürzer und schwächer als die oberen Schraubenfedern 12 zu dimensionieren, um so bei einem leeren Fach 11 eine nach vorne überhängende, in Fig. 7 gestrichelt gezeigte Schrägstellung des Platten-oder Bügelelementes 25 zu erreichen, die ein Befüllen des Faches 11 mit Gegenständen 10 erleichtert. Auch bei der Ausführungsform gemäß Fig. 7 ist schließlich im Boden 3 vorne eine Ausnehmung 14 zum Erfassen des jeweils vordersten Gegenstandes 10 vorgesehen, um diesen nach oben verschieben und sodann nach vorne über die Oberseite des unteren Anschlages 9 heraus schwenken zu können, wie dies bereits vorstehend anhand der Fig. 2 und 6 erläutert worden ist.

Die in Fig. 8 gezigte Facheinrichtung 1 entspricht größtenteils jener gemäß Fig. 1 bis 3, jedoch mit dem Unterschied, daß die Tiefe des Faches 11 größer, insbesondere entsprechend ungefährt der Dicke von sieben Gegenständen 10 (in Fig.8 ist nur ein Gegenstand 10 mit strichpunktierten Linien gezeigt) bemessen ist, und daß die Blattfeder 12 anstatt in eine Öffnung in der Rückwand 6 in eine entsprechende rechteckige, schlitzförmige Öffnung 15 im Boden 3, nahe dem Übergang zur Rückwand 6, eingesteckt ist. Die Blattfeder ist dementsprechend oberhalb von zwei Abwinkelungen 16, 17, die den Einsteckbereich definieren, ungefähr rechtwinkelig abgebogen, wobei der Winkel der Blattfeder 12 im Eckbereich Boden 3/Rückwand 6 anliegt und so zur Lagesicherung dient.

Im Bereich des oberen, freien Endes 13 ist die Blattfeder 12 ungefähr rechtwinkelig zurückgebogen, um mit dem freien Ende 13 in der Ruhestellung an der Stufe 26 der oberen, abgestuften Deckwand 7 anzuliegen bzw. beim Zurückschwenken (beim Füllen des Fachs 11 mit Gegenständen 10) nicht an der Unterseite der oberen Deckwand 7 zu streifen. Um in der strichpunktiert gezeigten zurückgeschwenkten Stellung der Feder 12 (bei gefülltem Fach 11) Platz für das zurückgebogene Ende 13 zu schaffen, ist die Rückwand 6 entsprechend ausgeschnitten, wie in Fig. 8 bis 27 veranschaulicht ist.

Im übrigen ist bei der Ausführungsform gemäß Fig.8 der obere Anschlag 8 gegenüber dem unteren Anschlag 9 in horizontaler Richtung etwas zurückversetzt, wodurch eine etwas nach hinten geneigte Schrägstellung der CD-Kassetten 10 erreicht wird. Dadurch eignet sich die Facheinrichtung 1 gemäß Fig. 8 besonders für eine Anbringung unterhalb Augenhöhe. Für eine Anbringung oberhalb Augenhöhe wäre der obere Anschlag 8 gegenüber dem unteren Anschlag 9 nach vorne zu versetzen, so daß eine überhängende Lage der CD-Kassetten 10 erzeilt würde.

Schließlich ist in Fig. 8 noch veranschaulicht, daß die Durchgreif-Ausnehmung 14 auch tiefer reichen kann, beispielsweise in der Tiefe entsprechend ungefähr zwei CD-Kassetten (d.h. einer Doppelpackung, einer sogenannten Doppeldose) bemessen werden kann, um so die Entnahme von Doppelpackungen zu erleichtern.

Wenn die Erfindung vorstehend anhand von besonders bevorzugten Ausführungsformen näher erläutert worden ist, so sind doch selbstverständlich Abwandlungen und Modifikationen im Rahmen der Erfindung möglich. So wäre es beispielsweise auch denkbar, bei der Facheinrichtung 1 gemäß Fig. 7 eine Blattfeder 12 ähnlich jeder gemäß Fig. 1 bis 5 oder Fig. 8 vorzusehen, und es könnte überdies auch ein vorderer, horizontaler Bodenabschnitt 4 vorgesehen werden. Andererseits könnte die Facheinrichtung gemäß Fig. 1 bis 6 oder Fig. 8 auch mit einen durchgehend schrägen Boden 3 ausgestattet sein, und sie könnte ferner auch anstatt für drei bzw. sieben Gegenstände hintereinander, wie dargestellt, für eine andere Anzahl von Gegenständen 10 ausgelegt sein. Um die Gegenstände 10 oben in Anlage am oberen Anschlag 8 zu drücken, könnten auch nach andere dem Fachmann bekannte Federn 12 eingesetzt werden, jedoch haben sich die anhand der Fig. 1 bis 5 und 8 beschriebenen Blattfedern 12 als besonders vorteilhaft in ihrer Funktion sowie Montageart erwiesen. Der Hauptkörper der Facheinrichtung 1 könnte ferner anstatt durch ein C- oder L-förmiges Blech-profil auch durch einen Kunststoff-Strangprofilabschnitt gebildet sein, und er könnte selbstverständlich auch durch miteinander verbundene Einzelteile (Rückwand, Boden etc.) realisiert werden. Insbesondere ist es grundsätzlich nicht notwendig, einen plattenförmigen Boden 3 bzw. eine plattenförmige, durchgehende Rückwand 6 vorzusehen, diese Bauelemente könnten vielmehr auch diskontinuierlich, beispielweise mit Hilfe von Gittern oder Stangen, ausgebildet sein.

## Patentansprüche

1. Facheinrichtung (1) zur Aufbewahrung und Zurschaustellung von steifen, flachen Gegenständen (10), wie insbesondere CD-(Compact-Disc-)Kassetten, mit einem die Gegenstände (10) in zumindest im wesentlichen aufrechter Lage abstützenden, zumindest teilweise schräg nach vorne abfallend ausgebildeten Boden (3), an dessen Vorderseite ein, z.B. durch einen hochstehenden Rand gebildeter, unterer Anschlag (9) für die Gegenstände (10) vorgesehen ist, und an den rückseitig eine aufrechte Rückwand (6) anschließt, mit einem die Gegenstände (10) im oberen Randbereich zurückhaltenden oberen Anschlag (8), wobei die Gegenstände (10) zum Nachfüllen oder zur Entnahme hinter dem oberen Anschlag (8) soweit relativ zum unteren Anschlag (9) hebbar sind, daß sie zum Einsetzen oder zur Herausnahme mit ihrem unteren Rand über den unteren Anschlag (9) geschwenkt werden können, und mit zumindest einer die Gegenstände (10) nach vorne hin belastenden Feder (12), die im Bereich der Rückwand (6) vorgesehen ist, und die nur im oberen Fachbereich wirksam ist und mit einem oberen Anlageteil (13, 25) bei leerer Facheinrichtung (1) hinter dem oberen Anschlag (8) angeordnet ist.

2. Facheinrichtung nach Anspruch 1 dadurch gekennzeichnet, daß die Feder (12) an der Rückwand (6) befestigt ist.

3. Facheinrichtung nach Anspruch 1 oder 2, dadurch gekennzeichnet, daß als Feder (12) eine Blattfeder vorgesehen ist, die sich von einer unteren Stelle an der Rückwand (6) mit ihrem freien Ende (13) nach vorne oben erstreckt.

4. Facheinrichtung nach Anspruch 3, dadurch gekennzeichnet, daß die Blattfeder (12) zu ihrer Befestigung durch eine Öffnung (15) in der Rückwand (6) oder im Boden (3) eingesteckt und in der Öffnung (13) zufolge ihrer Federkraft gehalten ist.

5. Facheinrichtung nach Anspruch 4, dadurch gekennzeichnet, daß oberhalb der Öffnung (15) ein Vorsprung (19) an der Rückwand (6) vorgesehen ist, der in ein Loch (18) in der Blattfeder (12) zu deren zusätzlicher Lagesicherung eingreift.

6. Facheinrichtung nach einem der Ansprüche 1 bis 5, dadurch gekennzeichnet, daß der Boden (3) einen vorderen horizontalen Bodenabschnitt (4) und einen daran anschließenden hinteren schrägen Abschnitt (5) aufweist, und daß im horizontalen Bodenabschnitt (4) sowie im an diesen vorne anschließenden Rand (9) eine Ausnehmung (14) mit einer Tiefe entsprechend ungefähr der Dicke eines der Gegenstände (10) vorgesehen ist, um jeweils den vordersten Gegenstand eines Stapels ergreifen zu können.

7. Facheinrichtung nach einem der Ansprüche 1 bis 6, dadurch gekennzeichnet, daß der obere Anschlag (8) gegenüber dem unteren Anschlag (9) am Boden (3) in horizontaler Richtung versetzt ist (Fig. 8).

## Claims

1. Shelf device (1) for the storage and display of stiff, flat articles (10), such as in particular CD (compact disc) cassettes, comprising an at least partly forwardly and downwardly inclined floor (3), supporting the articles (10) in an at least substantially upright position, at the front edge of which floor a lower stop (9) for the articles (10), formed for example by an upstanding rim, is provided, and the rear of which floor is adjoined by an upright back wall (6), comprising an upper stop (8), retaining the articles (10) in the upper edge zone, wherein the articles (10) can be raised behind the upper stop (8) and relative to the lower stop (9) sufficiently far for filling or removal for them to be swung with their lower edge over the lower stop (9) to insert or remove them, and comprising at least one spring (12), biasing the articles (10) forwards, which spring is provided in the region of the back wall (6) and is active only in the upper region of the shelf device and is disposed with an upper bearing portion (13, 25) behind the upper stop (8) when the shelf device (1) is empty.

2. Shelf device according to Claim 1, characterized in that the spring (12) is fixed to the back wall (6).

3. Shelf device according to Claim 1 or 2, characterized in that a leaf spring is provided as spring (12), which extends from a lower position on the back wall (6) with its free end (13) forwards and upwards.

4. Shelf device according to Claim 3, characterized in that the leaf spring (12) is pushed through an opening (15) in the back wall (6) or in the floor (3) for the purpose of fixing it and is held in the opening (15) by its spring force.

5. Shelf device according to Claim 4, characterized in that above the opening (15) a projection (19) is provided on the back wall (6), which projection engages into a hole (18) in the leaf spring (12) for additionally securing its position.

6. Shelf device according to one of Claims 1 to 5, characterized in that the floor (3) comprises a forward, horizontal floor portion (4) and a rear, inclined portion (5) adjoining thereto, and that, in the horizontal floor portion (4) and also in the rim (9) adjoining it at the front, a recess (14) having a depth corresponding approximately to the thickness of one of the articles (10) is provided, to enable the foremost article of each stack to be seized.

7. Shelf device according to one of Claims 1 to 6, characterized in that the upper stop (8) is offset in the horizontal direction with respect to the lower stop (9) on the floor (3) (Fig. 8).

## Revendications

1. Dispositif à casier (1) pour stocker et présenter des objets (10) rigides, plats, tels que notamment des cassettes de disques compacts, comportant un fond (3) soutenant les objets (10) dans au moins une position à peu près verticale, conformé au moins partiellement déclive vers l'avant, sur la face avant duquel il est prévu une butée (9) inférieure, formée par exemple par un bord relevé, pour les objets (10) et auquel se raccorde à l'arrière une paroi arrière (6) verticale, comportant une butée supérieure (8) retenant les objets (10) dans la zone de bordure supérieure, les objets (10) pouvant être suffisammennt soulevés par rapport à la butée inférieure (9) derrière la butée supérieure (8), en vue du garnissage ou du prélèvement, pour qu'ils puissent être pivotés, pour leur mise en place ou leur extraction, avec leur bord inférieur par-dessus la butée inférieure (9), et comportant au moins un ressort (12), agissant vers l'avant sur les objets (10), lequel ressort est prévu dans la région de la paroi arrière (6) et n'agit que dans la partie supérieure du casier et est placé avec une partie supérieure d'application (13, 25) derrière la butée supérieure (8), lorsque le dispositif à casier (1) est vide.

2. Dispositif à casier selon la revendication 1, caractérisé en ce que le ressort (12) est fixé sur la paroi arrière (6).

3. Dispositif à casier selon la revendication 1 ou 2, caractérisé en ce qu'il est prévu comme ressort (12), un ressort à lame qui s'étend vers le haut, depuis un point inférieur de la paroi arrière (6), avec son extrémité libre (13) vers l'avant.

4. Dispositif à casier selon la revendication 3, caractérisé en ce que le ressort à lame (12) est inséré pour sa fixation à travers une ouverture (15) de la paroi arrière (6) ou du fond (3) et est maintenu dans l'ouverture (13), sous l'effet de sa force élastique.

5. Dispositif à casier selon la revendication 4, caractérisé en ce qu'au-dessus de l'ouverture (15), il est prévu une partie saillante (19) sur la paroi arrière (6), laquelle partie saillante s'engage dans un trou (18) du ressort à lame (12), pour son blocage supplémentaire en position.

6. Dispositif à casier selon l'une des revendications 1 à 5, caractérisé en ce que le fond (3) comporte une partie de fond (4) avant horizontale et une partie (5) arrière oblique se raccordant à la première et en ce que dans la partie de fond (4) horizontale ainsi que dans le bord (9) se raccordant à l'avant de cette partie, il est prévu un évidement (14) d'une profondeur correspondant à peu près à l'épaisseur de l'un des objets (10), afin de permettre de saisir chaque fois l'objet situé le plus en avant d'une pile.

7. Dispositif à casier selon l'une des revendications 1 à 6, caractérisé en ce que la butée supérieure (8) est décalée horizontalement par rapport à la butée inférieure (9) du fond (3) (fig. 8).

Fig.1

Fig.2

Fig.3

Fig.4

Fig.5

13

12

18

16

17

Fig.6

7

11

8

6

20

11

20

10

9

14

Fig.7

Fig.8